# FASCICULE DE BREVET EUROPEEN

(11) **EP 3 201 490 B1**
(45) Date de publication et mention de la délivrance du brevet: **16.12.2020**
(21) Numéro de dépôt: 15774887.2
(22) Date de dépôt: 24.09.2015
(51) Int. Cl.: F16F 15/121, F16F 15/133

(54) **AMORTISSEUR DE TORSION A LAME**
TORSIONSDÄMPFER MIT SCHAUFEL
TORSIONAL DAMPER WITH BLADE

(30) Priorité: 01.10.2014 FR 1459348
(43) Date de publication de la demande: 09.08.2017
(73) Titulaire: Valeo Embrayages, 80009 Amiens Cedex 2 (FR)
(72) Inventeur: FENIOUX, Daniel, F-80480 Saleux (FR); MAUREL, Hervé, F-80000 Amiens (FR)
(74) Mandataire: Cardon, Nicolas
(86) Numéro de dépôt international: PCT/EP2015/072020
(87) Numéro de publication internationale: WO 2016/050612

(56) Documents cités:
- DE-A1- 19 919 449
- FR-A1- 2 628 804
- FR-A1- 3 000 155
- GB-A- 2 283 558

## Description

### Domaine technique de l'invention

L'invention se rapporte à un amortisseur de torsion destiné à équiper un dispositif de transmission de couple. L'invention se rapporte plus particulièrement au domaine des transmissions pour véhicule automobile.

### Etat de la technique

Dans le domaine des transmissions automobiles, il est connu de munir les dispositifs de transmission de couple d'amortisseurs de torsion permettant d'absorber et amortir les vibrations et acyclismes générés par un moteur à combustion interne.

Les amortisseurs de torsion comportent un élément d'entrée et un élément de sortie mobiles en rotation autour d'un axe de rotation commun et des moyens élastiques d'amortissement pour transmettre le couple et amortir les acyclismes de rotation entre l'élément d'entrée et l'élément de sortie.

De tels amortisseurs de torsion équipent notamment les doubles volants amortisseurs (DVA), les frictions d'embrayage, dans le cas d'une transmission manuelle ou robotisée, ou les embrayages de verrouillage, également appelés embrayages « lock-up », équipant les dispositifs d'accouplement hydraulique, dans le cas d'une transmission automatique.

Le document FR3000155 illustre un amortisseur de torsion comportant deux moyens élastiques d'amortissement formés chacun par une lame élastique montée sur l'élément d'entrée et coopérant avec un suiveur de came monté sur l'élément de sortie.

La lame et le suiveur de came de chaque moyen élastique d'amortissement sont agencés de telle sorte que, pour un débattement angulaire entre l'élément d'entrée et l'élément de sortie, de part et d'autre d'une position angulaire relative de repos, le suiveur de came se déplace le long de la lame et, ce faisant, exerce un effort de flexion sur la lame élastique. Par réaction, la lame élastique exerce sur le suiveur de came une force de rappel qui tend à ramener les éléments d'entrée et de sortie vers leur position angulaire de repos. La flexion de la lame élastique permet ainsi d'amortir les vibrations et irrégularités de rotation entre l'élément d'entrée et l'élément de sortie tout en assurant la transmission de couple.

Cependant, de telles lames sont soumises à des contraintes trop importantes lorsque le couple à transmettre est élevé et ne sont donc pas adaptés pour la transmission de couples élevés.

### Objet de l'invention

Un aspect de l'invention part de l'idée de résoudre les inconvénients de l'art antérieur en proposant un amortisseur de torsion à lames élastiques qui soit particulièrement efficace et dans lequel les lames élastiques sont soumises à de plus faibles contraintes.

Selon un mode de réalisation, l'invention fournit un amortisseur de torsion pour dispositif de transmission de couple comportant :
- un premier élément et un second élément mobiles en rotation l'un par rapport à l'autre autour d'un axe de rotation X ; et
- un premier moyen d'amortissement et un second moyen d'amortissement pour transmettre un couple et amortir les acyclismes de rotation entre le premier élément et le second élément, chaque moyen d'amortissement comportant :
   o une lame élastiquement déformable solidaire de l'un desdits premier et second éléments et comportant une portion de fixation de la lame sur ledit premier ou second élément et une portion élastique, la portion élastique se développant circonférientiellement depuis la portion de fixation jusqu'à une extrémité distale libre, la portion élastique de la lame comportant une surface de came,
   o un élément d'appui porté par l'autre desdits premier et second éléments et agencé pour coopérer avec la portion élastique de la lame dudit moyen d'amortissement, la portion élastique de la lame étant agencée de telle sorte que, pour un débattement angulaire entre les premier et second éléments par rapport à une position angulaire de repos, l'élément d'appui exerce un effort de flexion sur la lame produisant conjointement une force de réaction apte à rappeler les premier et second éléments vers ladite position angulaire de repos, l'élément d'appui comporte un suiveur de came agencé pour coopérer avec la surface de came, la surface de came étant agencée de telle sorte que, pour un débattement angulaire entre les premier et second éléments par rapport à une position angulaire de repos, le suiveur de came exerce un effort de flexion sur la lame produisant conjointement une force de réaction apte à rappeler les éléments vers ladite position angulaire de repos.

Selon l'invention, les lames du premier et du second moyens d'amortissement sont fixées de manière indépendantes à leur premier ou second élément respectif et la portion élastique de la lame du premier moyen d'amortissement se développe circonférentiellement au-delà de la portion de fixation de la lame du second moyen d'amortissement de sorte qu'au moins une partie de la portion élastique de la lame du second moyen d'amortissement soit radialement disposée entre l'extrémité distale libre de la lame du premier moyen d'amortissement et l'axe de rotation X.

Ainsi, le développement circonférentiel d'une lame au-delà de la portion de fixation de l'autre lame, c'est-à-dire un entrelacement des lames, permet de développer les lames sur de plus grande longueur. De telles lames de plus grandes longueurs sont soumises à des contraintes moins importantes, ce qui permet la transmission de couples élevés.

De plus, un tel agencement de lame est susceptible d'offrir une surface de lame avec laquelle coopère l'élément d'appui présentant une longueur circonférentielle plus importante. Cette longueur circonférentielle supplémentaire de la surface de la lame avec laquelle coopère l'élément d'appui permet un plus grand débattement angulaire entre les éléments, ce qui permet une diminution de la raideur de la lame et par conséquent un meilleur amortissement des acyclismes du moteur.

Selon d'autres modes de réalisation avantageux, un tel amortisseur à torsion peut présenter une ou plusieurs des caractéristiques suivantes :
- La lame est agencée pour se déformer dans un plan perpendiculaire à l'axe de rotation X.
- La portion de fixation de la lame est fixe par rapport à l'élément sur lequel la lame est fixée.
- en position angulaire de repos, la portion élastique de la lame du premier moyen d'amortissement et la portion élastique de la lame du second moyen d'amortissement sont toutes deux radialement disposées entre l'élément d'appui du premier moyen d'amortissement et l'axe de rotation X.
- la lame élastique du second moyen d'amortissement se développe circonférentiellement au-delà de la portion de fixation de la lame du premier moyen d'amortissement de sorte que la portion élastique de la lame du premier moyen d'amortissement soit radialement disposée entre l'extrémité distale libre de la lame du second moyen d'amortissement et l'axe de rotation X.
- en position angulaire de repos, la portion élastique de la lame du premier moyen d'amortissement et la portion élastique de la lame du second moyen d'amortissement sont toutes deux radialement disposées entre l'élément d'appui du second moyen d'amortissement et l'axe de rotation X
- les éléments d'appui du premier et du second moyens d'amortissement sont respectivement disposés radialement à l'extérieur des lames du premier et du second moyen d'amortissement.
- la portion élastique de chaque lame comporte :
   - une première portion se développant depuis la portion de fixation de la lame,
   - une portion coudée prolongeant la première portion, et
   - une seconde portion prolongeant circonférentiellement la portion coudée, et dans lequel :
   - la portion de fixation de la lame du premier moyen d'amortissement est diamétralement opposée à la portion de fixation de la lame du second moyen d'amortissement par rapport à l'axe de rotation X,
   - au moins une partie de la première portion de la lame du second moyen d'amortissement est radialement disposée entre la seconde portion de la lame du premier moyen d'amortissement et l'axe de rotation X, et
   - au moins une partie de la portion de fixation de la lame du second moyen d'amortissement est radialement disposée entre la portion coudée de la lame du premier moyen d'amortissement et l'axe de rotation X.
- pour chaque lame, la portion coudée a un rayon de courbure inférieur au rayon de courbure de la première portion et au rayon de courbure de la seconde portion.
- pour chaque lame, la seconde portion a un rayon de courbure inférieur au rayon de courbure de la première portion.
- la première portion a une épaisseur inférieure à la largeur de la seconde portion.
- le premier moyen d'amortissement est symétrique au second moyen d'amortissement par rapport à l'axe de rotation X.
- les éléments d'appui sont des galets montés mobile en rotation sur le premier ou second élément respectif par l'intermédiaire d'un palier à roulement.
- chaque lame s'étend circonférentiellement sur au moins 180°.

L'invention porte également sur un élément de transmission de couple, notamment pour véhicule automobile, comportant un amortisseur de torsion précité.

Selon d'autres modes de réalisation avantageux, un tel élément de transmission peut présenter une ou plusieurs des caractéristiques suivantes :
- l'élément de transmission comporte deux amortisseurs de torsion tels que ci-dessus disposés en série.
- L'élément de transmission comporte deux amortisseurs de torsion tels que ci-dessus disposés en parallèle.

Un aspect de l'invention part de l'idée de réduire la raideur des moyens d'amortissement afin de permettre un meilleur amortissement des acyclismes. Un aspect de l'invention part de l'idée d'augmenter le débattement angulaire maximal entre l'élément d'entrée et l'élément de sortie. Un aspect de l'invention part de l'idée de réduire les zones de concentration de contraintes sur une lame ressort. Un aspect de l'invention part de l'idée de limiter l'encombrement radial d'une lame ressort sans entraver l'amortissement des acyclismes. Un aspect de l'invention est de proposer un amortisseur de torsion à lames soumis à des contraintes acceptables lors de la transmission d'un couple élevé. Un objet de l'invention est de fournir un amortisseur de torsion permettant une filtration des acyclismes de qualité. Un objet de l'invention est de fournir un amortisseur de torsion permettant un débattement angulaire important. Un objet de l'invention est de réduire la raideur des lames. Un objet de l'invention est de fournir une lame élastique présentant une surface de came destinée à coopérer avec le suiveur de came de grande longueur.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.

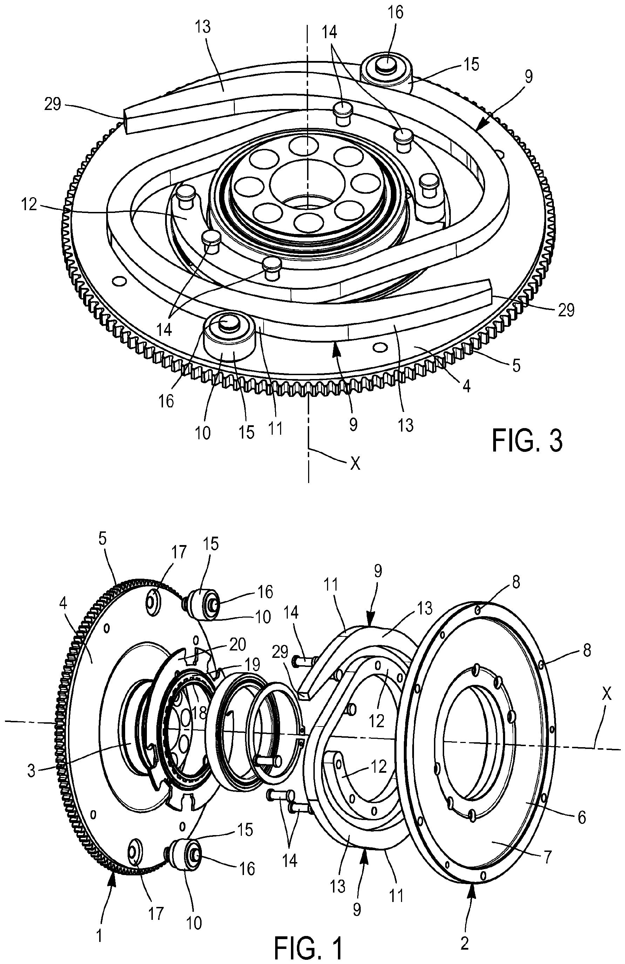

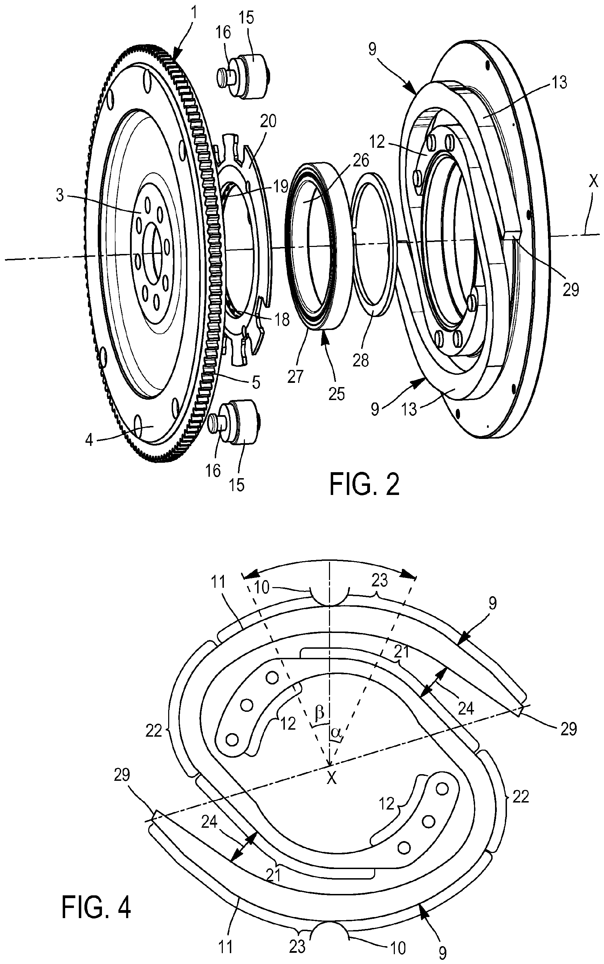

Sur ces figures :
- **La** **figure 1** est une vue en perspective schématique éclatée d'un amortisseur de torsion ;
- **La** **figure 2** est une vue en perspective schématique éclatée de l'amortisseur de torsion de la figure 1 selon une orientation différente ;
- **La** **figure 3** est une vue en perspective schématique de l'amortisseur de torsion des figures 1 et 2 dans un état monté et dans lequel l'élément de sortie n'est pas représenté ;
- **La** **figure 4** est une vue schématique du dessus des moyens d'amortissements de l'amortisseur de torsion des figures 1 et 2.

Dans la description et les revendications, on utilisera, les termes "externe" et "interne" ainsi que les orientations "axiale" et "radiale" pour désigner, selon les définitions données dans la description, des éléments de l'amortisseur de torsion. Par convention, l'orientation "radiale" est dirigée orthogonalement à l'axe (X) de rotation des éléments de l'amortisseur de torsion déterminant l'orientation "axiale" et, de l'intérieur vers l'extérieur en s'éloignant dudit axe, l'orientation "circonférentielle" est dirigée orthogonalement à l'axe de l'amortisseur de torsion et orthogonalement à la direction radiale. Ainsi, un élément décrit comme se développant circonférentiellement est un élément dont une composante se développe selon une direction circonférentielle. Les termes "externe" et "interne" sont utilisés pour définir la position relative d'un élément par rapport à un autre, par référence à l'axe de rotation de l'amortisseur de torsion, un élément proche de l'axe est ainsi qualifié d'interne par opposition à un élément externe situé radialement en périphérie.

L'amortisseur de torsion, illustré sur les figures 1 à 3, est destiné à être intégré à un élément de transmission de la chaîne de transmission d'un véhicule automobile. Cet élément de transmission peut par exemple être un volant moteur équipé d'un amortisseur de torsion, tel qu'un double volant amortisseur, un embrayage de lock-up d'un dispositif d'accouplement hydraulique ou une friction d'embrayage. On notera en outre que, dans le cas d'une friction d'embrayage, l'amortisseur de torsion selon l'invention peut former un amortisseur principal et/ou un pré-amortisseur.

L'amortisseur de torsion comporte un élément d'entrée 1 et un élément de sortie 2 qui sont disposés, dans la chaîne de transmission, respectivement côté moteur à combustion interne et côté boîte de vitesses. A titre d'exemple, dans le mode de réalisation représenté sur les figures 1 à 4, l'amortisseur de torsion est intégré à un double volant amortisseur, l'élément d'entrée 1 étant constitué par un premier volant d'inertie destiné à être fixé au bout d'un arbre menant, tel que le vilebrequin d'un moteur à combustion interne, alors que l'élément de sortie 2 est constitué par un second volant d'inertie formant, en général, plateau de réaction d'un embrayage de couplage à un arbre mené, tel que l'arbre d'entrée d'une boîte de vitesses.

Les éléments d'entrée 1 et de sortie 2 sont mobiles en rotation autour d'un axe de rotation X commun. Les éléments d'entrée 1 et de sortie 2 sont guidés en rotation l'un par rapport à l'autre au moyen d'un palier, tel qu'un palier à roulement 25. Un tel palier à roulement 25 est supporté par un moyeu 3 de l'élément d'entrée 1. Le palier à roulement 25 comporte une bague interne 26 montée sur l'élément d'entrée 1 et une bague externe 27 montée sur l'élément de sortie 2. Le moyeu 3, radialement interne, de l'élément d'entrée 1 comporte un épaulement, servant à l'appui de la bague interne 26 du palier à roulement 25 et qui retient ladite bague interne 26 en direction du moteur. La bague interne 26 est en outre retenue sur l'élément d'entrée 1 en direction opposée au moteur par un circlip 28. L'élément de sortie 2 comporte, sur sa périphérie interne un épaulement servant à l'appui de la bague externe 27 du palier à roulement 25 et retenant ladite bague externe 27 en direction opposée au moteur. La bague externe 27 est montée à force sur l'élément de sortie 2.

L'élément d'entrée 1 comporte une portion annulaire 4 se développant radialement depuis le moyeu 3. Cette portion annulaire 4 comporte des moyens de fixations (non représentés) à l'arbre menant, par exemple sous la forme d'orifices destinés à coopérer avec des rivets de fixation sur l'arbre menant. En outre, une périphérie extérieure de la portion annulaire 4 comporte une couronne dentée 5 pour l'entraînement en rotation de l'élément d'entrée 1 à l'aide d'un démarreur.

L'élément de sortie 2 comporte une portion annulaire 6 plane. Dans le cadre d'un Double Volant Amortisseur, cette portion annulaire 6 forme, sur une face opposée à l'élément d'entrée 1, une surface d'appui 7 pour une garniture de friction d'un disque d'embrayage (non représenté). L'élément de sortie 2 comporte alors, à proximité de son bord externe, des orifices 8 servant au montage d'un couvercle d'embrayage.

L'élément d'entrée 1 et l'élément de sortie 2 sont connectés en rotation par des moyens d'amortissement. Les moyens d'amortissement sont aptes à transmettre un couple entraînant de l'élément d'entrée 1 vers l'élément de sortie 2 (sens direct) et un couple résistant de l'élément de sortie 2 vers l'élément d'entrée 1 (sens rétro). D'autre part, les moyens d'amortissement développent un couple de rappel élastique tendant à rappeler l'élément d'entrée 1 et l'élément de sortie 2 dans une position angulaire relative de repos.

En regard des figures 1 à 3, l'amortisseur de torsion comporte un premier moyen d'amortissement et un second moyen d'amortissement symétriques par rapport à l'axe de rotation X. Chaque moyen d'amortissement comporte d'une part une lame élastique 9 et, d'autre part, un suiveur de came 10. La lame élastique 9 est montée solidaire en rotation de l'élément de sortie 2. Le suiveur de came 10 est monté solidaire en rotation de l'élément d'entrée 1. Dans un autre mode de réalisation non représenté, la lame élastique est montée solidaire en rotation de l'élément d'entrée et le suiveur de came est monté solidaire en rotation de l'élément de sortie.

Les vibrations de torsion et les irrégularités de couple qui sont produites par le moteur à combustion interne sont transmises par l'arbre menant à l'élément d'entrée et génèrent des rotations relatives entre l'élément d'entrée et l'élément de sortie. Ces vibrations et irrégularités sont amorties par la flexion de la lame élastique. Pour cela, la lame élastique 9 présente une surface de came 11 qui est agencée pour coopérer avec le suiveur de came 10. La lame élastique 9 est conçue de sorte à pouvoir supporter des contraintes importantes, pouvant aller jusqu'à 1500 MPa. La lame élastique 9 est réalisée dans un acier, par exemple du type acier 51CrV4 ayant subie des traitements thermiques dédiés, tels qu'une trempe suivie d'un revenu.

La lame élastique 9 présente une portion de fixation 12 fixe par rapport à l'élément de sortie 2 afin de permettre la solidarisation en rotation de la lame élastique 9 sur l'élément de sortie 2. La portion de fixation 12 fixée sur l'élément de sortie 2 est prolongée par une portion élastique 13 déformable afin d'amortir les acyclismes du moteur.

La portion de fixation 12 se développe circonférentiellement et radialement à distance du moyeu 3 de l'élément d'entrée 1. Dans le mode de réalisation représenté sur les figures 1 à 3, la portion de fixation 12 de chaque moyen d'amortissement est fixée à l'élément de sortie 2 par trois rivets 14. Afin d'assurer une bonne fixation de la lame élastique 9, les trois rivets 14 ne sont pas alignés sur le même axe. La fixation d'une lame élastique avec moins de trois rivets 14 n'assurerait pas une bonne fixation. De plus, la fixation de la lame élastique 9 avec un plus grand nombre de rivets 14 engendrerait soit, dans le cas de rivets de même dimensions, un problème de place, soit, dans le cas de rivets de dimensions inférieures, un problème de résistance mécanique.

La portion élastique 13 porte la surface de came 11 coopérant avec le suiveur de came 10. La surface de came 11 se développe circonférentiellement selon un rayon de courbure déterminé en fonction de la raideur souhaitée de la lame élastique 9. Cette surface de came peut présenter des rayons de courbure différents selon les raideurs ponctuelles souhaitées, afin de permettre des variations de pente de la courbe caractéristique de l'amortisseur de torsion, représentant le couple transmis en fonction du débattement angulaire. La lame élastique est décrite plus en détail ci-après en regard de la figure 4.

Le suiveur de came 10 de chaque moyen d'amortissement comporte un galet 15 porté par une tige cylindrique 16. La tige 16 est montée fixe dans un logement 17 de l'élément d'entrée 1. De façon à réduire les frottements parasitaires susceptibles d'affecter la fonction d'amortissement, le galet 15 est avantageusement monté en rotation sur la tige cylindrique 16 autour d'un axe de rotation parallèle à l'axe de rotation X. Le galet 15 est par exemple monté sur la tige 16 par l'intermédiaire d'un palier à roulement tel qu'un roulement à billes ou à rouleaux. Dans un mode de réalisation, le galet 15 présente un revêtement anti-friction.

Le galet 15 est maintenu en appui contre la surface de came 11 et est agencée pour rouler contre ladite surface de came 11 lors d'un mouvement relatif entre l'élément d'entrée 1 et l'élément de sortie 2. Le galet 15 est disposé radialement à l'extérieur de la surface de came 11 de sorte à maintenir radialement la lame élastique 9 lorsqu'elle est soumise à la force centrifuge.

L'amortisseur de torsion comporte en outre des organes de frottement agencés pour exercer un couple résistant entre l'élément d'entrée 1 et l'élément de sortie 2 lors de leur débattement relatif. Ainsi, les organes de frottement sont aptes à dissiper l'énergie accumulée dans les lames élastiques 9. Les organes de frottement comportent un anneau de fixation 18, une rondelle élastique 19 et une rondelle plastique 20. L'anneau de fixation 18 est logé dans une rainure du moyeu 3 de l'élément d'entrée 1. La rondelle élastique 19 exerce sur la rondelle plastique 20 une charge axiale permettant de la plaquer contre le premier élément 1. La rondelle plastique 20 comporte sur sa périphérie externe une denture engrenant, avec un jeu circonférentiel déterminé, avec les rivets de fixation des lames élastiques 9 sur l'élément de sortie 2. Ainsi, lorsque le jeu circonférentiel est rattrapé, lors d'un débattement relatif entre l'élément d'entrée 1 et l'élément de sortie 2, la rondelle plastique 20 est entraînée en rotation avec l'élément de sortie 2 et un couple de frottement s'exerce entre la rondelle plastique 20 et l'élément d'entrée 1.

La figure 4 représente schématiquement les lames élastiques 9 et les suiveurs de came 10 associés du premier moyen d'amortissement et du second moyen d'amortissement.

La portion élastique 13 de chaque lame élastique 9 comporte une première portion 21, un coude 22 et une seconde portion 23. La première portion 21 de la lame prolonge la portion de fixation 12 de la lame élastique 9. Le coude 22 prolonge la première portion 21 de la lame élastique 9. La première portion 21 comporte d'une part une première partie se développant circonférentiellement depuis la portion de fixation 12 et, d'autre part, une seconde partie se développant de manière sensiblement rectiligne, de sorte que le coude 22 de la lame élastique 9 est diamétralement opposé à la portion de fixation 12 par rapport à l'axe de rotation X. La formation de cette seconde partie rectiligne de la première portion 21 est possible du fait de l'éloignement radial de la portion de fixation 12 par rapport au moyeu 3 de l'élément d'entrée 1. Le coude 22 est radialement plus éloigné de l'axe de rotation X que la portion de fixation 12.

La seconde portion 23 prolonge le coude 22. La seconde portion 23 s'étend de manière sensiblement circonférentielle depuis le coude 22 jusqu'à l'extrémité libre 29 de la lame 9. La surface de came 11 se développe sur une face externe de la seconde portion 23. Avantageusement, la surface de came 11 se développe circonférentiellement sur un angle d'environ 125° à 130°. Le rayon de courbure de la seconde portion 23, en particulier le rayon de courbure de la face externe définissant la surface de came 11, est déterminé en fonction de la raideur souhaitée de la lame élastique 9.

Les lames élastiques 9 des moyens d'amortissements représentés schématiquement sur la figure 4 sont symétriques par rapport à l'axe de rotation X. La première portion 21 d'une lame élastique 9 est radialement disposée entre la seconde portion 23 de l'autre lame élastique 9 et l'axe de rotation X. De plus, le coude 22 d'une lame élastique 9 est disposé circonférentiellement au-delà de la seconde portion 23 de l'autre lame élastique 9. Ainsi, la forme rectiligne de la première portion 21 ainsi que la disposition circonférentielle du coude 22 de la première, respectivement seconde, lame élastique 9 par rapport à la seconde portion 23 de la seconde, respectivement première, lame élastique 9 assurent la présence d'un espace 24 entre la première portion 21 de la première, respectivement seconde, lame élastique 9 et la seconde portion 23 de la seconde, respectivement première, lame élastique 9. Cet espace 24 permet la déformation et le débattement radial de la seconde portion 23 de la première, respectivement seconde, lame élastique 9 et donc la possibilité de diminuer la raideur de la lame élastique 9 pour permettre une meilleur filtration des acyclismes.

En outre, la disposition du coude 22 d'une lame élastique 9 au plus proche circonférentiellement de l'extrémité libre 29 de l'autre lame élastique 9 permet la réalisation d'une seconde portion 23 de grande longueur. La surface de came 11 située sur la face externe de cette seconde portion peut donc également se développer circonférentiellement sur une grande longueur. Le suiveur de came 10 a ainsi un débattement angulaire important offrant la possibilité de réduire la raideur de la lame pour offrir un meilleur amortissement.

L'épaisseur de la seconde portion 23 de la lame élastique 9, selon une direction radiale, est avantageusement supérieure à l'épaisseur de la première portion 21 de la lame élastique 9, selon une direction radiale. Cette configuration des épaisseurs de la lame élastique 9 permet la déformation élastique de la lame élastique 9 au niveau de la première portion 21 préférentiellement à la déformation au niveau de la seconde portion 23.

Lorsqu'un couple entraînant est transmis de l'élément d'entrée 1 vers l'élément de sortie 2 (sens direct), le couple à transmettre entraîne un débattement relatif entre l'élément d'entrée 1 et l'élément de sortie 2 selon une première direction. Le galet 15 est alors déplacé d'un angle α (voir figure 4) par rapport à la lame élastique 9. Le déplacement du galet 15 sur la surface de came 11 entraîne une flexion de la lame élastique 9. L'effort de flexion dépend notamment de la géométrie de la lame élastique 9 et de sa matière, en particulier de son module d'élasticité transversal. La composante tangentielle de l'effort de flexion permet la transmission du couple moteur. En réaction, la lame élastique 9 exerce sur le galet 15 une force de réaction dont la composante tangentielle constitue une force de rappel qui tend à ramener l'élément d'entrée 1 et l'élément de sortie 2 vers leur position angulaire relative de repos.

Lorsqu'un couple résistant est transmis de l'élément de sortie 2 vers l'élément d'entrée 1 (sens rétro), le couple à transmettre entraîne un débattement relatif entre l'élément d'entrée 1 et l'élément de sortie 2 selon une seconde direction opposée. Le galet 15 est alors déplacé d'un angle β (voir figure 4) par rapport à la lame élastique. Dans ce cas, la composante tangentielle de l'effort de flexion présente une direction opposée à la composante tangentielle de l'effort de flexion d'un entraînement selon le sens direct. De même, la lame élastique 9 exerce une force de réaction, de direction contraire à celle du sens direct, de sorte à ramener l'élément de sortie 2 et l'élément d'entrée 1 vers leur position angulaire relative de repos. Le coude 22 d'une lame élastique 9, constituant la zone de plus forte contrainte lors d'une déformation de la lame élastique 9, est avantageusement disposé circonférentiellement au plus proche de la zone de fixation 12 afin d'offrir le plus de débattement possible dans le sens rétro tout en laissant l'espace nécessaire à son bon fonctionnement et à la déformation de l'autre lame élastique 9. Ainsi, avantageusement, un tel amortisseur de torsion peut présenter, depuis la position de repos, un débattement en sens direct de l'ordre de 90° et un débattement en sens rétro de l'ordre de 35° à 40°.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, définie par les revendications adjointes.

En particulier, il est possible de solidariser un des moyens d'amortissement à l'un des éléments et l'autre des moyens d'amortissement à l'autre des éléments.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Amortisseur de torsion pour dispositif de transmission de couple comportant :
- un premier élément (1) et un second élément (2) mobiles en rotation l'un par rapport à l'autre autour d'un axe de rotation X ; et
- un premier moyen d'amortissement et un second moyen d'amortissement pour transmettre un couple et amortir les acyclismes de rotation entre le premier élément et le second élément, chaque moyen d'amortissement comportant :
o une lame élastiquement déformable (9) solidaire de l'un desdits premier et second éléments et comportant une portion de fixation (12) de la lame sur ledit premier ou second élément et une portion élastique (13), la portion élastique se développant circonférientiellement depuis la portion de fixation jusqu'à une extrémité distale libre (29), la portion élastique de la lame comportant une surface de came (11),
o un élément d'appui (10) porté par l'autre desdits premier et second éléments et agencé pour coopérer avec la portion élastique de la lame dudit moyen d'amortissement, la portion élastique de la lame étant agencée de telle sorte que, pour un débattement angulaire entre les premier et second éléments par rapport à une position angulaire de repos, l'élément d'appui exerce un effort de flexion sur la lame produisant conjointement une force de réaction apte à rappeler les premier et second éléments vers ladite position angulaire de repos, l'élément d'appui comportant un suiveur de came agencé pour coopérer avec la surface de came, la surface de came étant agencée de telle sorte que, pour un débattement angulaire entre les premier et second éléments par rapport à une position angulaire de repos, le suiveur de came exerce un effort de flexion sur la lame produisant conjointement une force de réaction apte à rappeler les éléments vers ladite position angulaire de repos
ledit amortisseur étant **caractérisé en ce que**, les lames du premier et du second moyens d'amortissement sont fixées de manière indépendante au premier ou second élément et la portion élastique de la lame du premier moyen d'amortissement se développe circonférentiellement au-delà de la portion de fixation de la lame du second moyen d'amortissement de sorte qu'au moins une partie de la portion élastique de la lame du second moyen d'amortissement soit radialement disposée entre l'extrémité distale libre de la lame du premier moyen d'amortissement et l'axe de rotation X.

2. Amortisseur de torsion selon la revendication 1, dans lequel, en position angulaire de repos, la portion élastique de la lame du premier moyen d'amortissement et la portion élastique de la lame du second moyen d'amortissement sont toutes deux radialement disposées entre l'élément d'appui du premier moyen d'amortissement et l'axe de rotation X.

3. Amortisseur de torsion selon l'une des revendications 1 à 2, dans lequel la lame élastique du second moyen d'amortissement se développe circonférentiellement au-delà de la portion de fixation de la lame du premier moyen d'amortissement de sorte que la portion élastique de la lame du premier moyen d'amortissement soit radialement disposée entre l'extrémité distale libre de la lame du second moyen d'amortissement et l'axe de rotation X.

4. Amortisseur de torsion selon la revendication 3, dans lequel, en position angulaire de repos, la portion élastique de la lame du premier moyen d'amortissement et la portion élastique de la lame du second moyen d'amortissement sont toutes deux radialement disposées entre l'élément d'appui du second moyen d'amortissement et l'axe de rotation X

5. Amortisseur de torsion selon l'une des revendications 1 à 4, dans lequel les éléments d'appui du premier et du second moyens d'amortissement sont respectivement disposés radialement à l'extérieur des lames du premier et du second moyen d'amortissement.

6. Amortisseur de torsion selon l'une des revendications 1 à 5, dans lequel la portion élastique de chaque lame comporte :
- une première portion (21) se développant depuis la portion de fixation de la lame,
- une portion coudée (22) prolongeant la première portion, et
- une seconde portion (23) prolongeant circonférentiellement la portion coudée, et dans lequel :
- la portion de fixation de la lame du premier moyen d'amortissement est diamétralement opposée à la portion de fixation de la lame du second moyen d'amortissement,
- au moins une partie de la première portion de la lame du second moyen d'amortissement est radialement disposée entre la seconde portion de la lame du premier moyen d'amortissement et l'axe de rotation X, et
- au moins une partie de la portion de fixation de la lame du second moyen d'amortissement est radialement disposée entre la portion coudée de la lame du premier moyen d'amortissement et l'axe de rotation X.

7. Amortisseur à torsion selon la revendication 6, dans lequel, pour chaque lame, la portion coudée a un rayon de courbure inférieur au rayon de courbure de la première portion et au rayon de courbure de la seconde portion.

8. Amortisseur à torsion selon l'une des revendications 6 à 7, dans lequel, pour chaque lame, la seconde portion a un rayon de courbure inférieur au rayon de courbure de la première portion.

9. Amortisseur de torsion selon l'une des revendications 6 à 8, dans lequel la première portion a une épaisseur inférieure à la largeur de la seconde portion.

10. Amortisseur de torsion selon l'une des revendications 1 à 9, dans lequel le premier moyen d'amortissement est symétrique au second moyen d'amortissement par rapport à l'axe de rotation X.

11. Amortisseur de torsion selon l'une quelconque des revendications 1 à 10, dans lequel les éléments d'appui sont des galets montés mobile en rotation sur le premier ou second élément respectif par l'intermédiaire d'un palier à roulement.

12. Amortisseur de torsion selon l'une quelconque des revendications 1 à 11, dans lequel chaque lame s'étend circonférentiellement sur au moins 180°.

13. Elément de transmission de couple, notamment pour véhicule automobile, comportant un amortisseur de torsion selon l'une des revendications 1 à 12.

## Patentansprüche

1. Torsionsdämpfer für Drehmomentübertragungsvorrichtung aufweisend:
- ein erstes Element (1) und ein zweites Element (2), die um eine Drehachse X bezogen aufeinander drehbeweglich sind; und
- ein erstes Dämpfungsmittel und ein zweites Dämpfungsmittel, um ein Drehmoment zu übertragen und die Drehungsungleichförmigkeiten zwischen dem ersten Element und dem zweiten Element zu dämpfen, jedes Dämpfungsmittel aufweisend:
o ein elastisch verformbares Blatt (9), das mit einem von dem ersten und zweiten Element fest verbunden ist und einen Abschnitt zur Befestigung (12) des Blatts auf dem ersten oder zweiten Element und einen elastischen Abschnitt (13) aufweist, wobei der elastische Abschnitt in Umfangsrichtung ausgehend von dem Befestigungsabschnitt bis zu einem freien distalen Ende (29) verläuft, wobei der elastische Abschnitt des Blatts eine Nockenfläche (11) aufweist,
o ein Stützelement (10), das von dem anderen des ersten und zweiten Elements getragen wird und angeordnet ist, mit dem elastischen Abschnitt des Blatts des Dämpfungsmittels zusammenzuwirken, wobei der elastische Abschnitt des Blatts so angeordnet ist, dass für einen Winkelausschlag zwischen dem ersten und zweiten Element bezogen auf eine Ruhe-Winkelposition das Stützelement eine Biegekraft auf das Blatt ausübt, wobei sie gemeinsam eine Reaktionskraft erzeugen, die geeignet ist, das erste und zweite Element in die Ruhe-Winkelposition zurückzuholen, wobei das Stützelement einen Nockenfolger aufweist, der angeordnet ist, mit der Nockenfläche zusammenzuwirken, wobei die Nockenfläche so angeordnet ist, dass für einen Winkelausschlag zwischen dem ersten und zweiten Element bezogen auf eine Ruhe-Winkelposition der Nockenfolger eine Biegekraft auf das Blatt ausübt, wobei sie gemeinsam eine Reaktionskraft erzeugen, die geeignet ist, die Elemente in die Ruhe-Winkelposition zurückzuholen,
wobei der Dämpfer **dadurch gekennzeichnet ist, dass** die Blätter des ersten und zweiten Dämpfungsmittels unabhängig am ersten oder zweiten Element befestigt sind und der elastische Abschnitt des Blatts des ersten Dämpfungsmittels in Umfangsrichtung über den Befestigungsabschnitt des Blatts des zweiten Dämpfungsmittels hinaus verläuft, so dass wenigstens ein Teilbereich des elastischen Abschnitts des Blatts des zweiten Dämpfungsmittels radial zwischen dem freien distalen Ende des Blatts des ersten Dämpfungsmittels und der Drehachse X angeordnet ist.

2. Torsionsdämpfer nach Anspruch 1, wobei in der Ruhe-Winkelposition der elastische Abschnitt des Blatts des ersten Dämpfungsmittels und der elastische Abschnitt des Blatts des zweiten Dämpfungsmittels beide radial zwischen dem Stützelement des ersten Dämpfungsmittels und der Drehachse X angeordnet ist.

3. Torsionsdämpfer nach einem der Ansprüche 1 bis 2, wobei das elastische Blatt des zweiten Dämpfungsmittels in Umfangsrichtung über den Befestigungsabschnitt des Blatts des ersten Dämpfungsmittels hinaus verläuft, so dass der elastische Abschnitt des Blatts des ersten Dämpfungsmittels radial zwischen dem freien distalen Ende des Blatts des zweiten Dämpfungsmittels und der Drehachse X angeordnet ist.

4. Torsionsdämpfer nach Anspruch 3, wobei in der Ruhe-Winkelposition der elastische Abschnitt des Blatts des ersten Dämpfungsmittels und der elastische Abschnitt des Blatts des zweiten Dämpfungsmittels beide radial zwischen dem Stützelement des zweiten Dämpfungsmittels und der Drehachse X angeordnet ist.

5. Torsionsdämpfer nach einem der Ansprüche 1 bis 4, wobei die Stützelemente des ersten und zweiten Dämpfungsmittels jeweils radial außerhalb der Blätter des ersten und zweiten Dämpfungsmittels angeordnet sind.

6. Torsionsdämpfer nach einem der Ansprüche 1 bis 5, wobei der elastische Abschnitt jedes Blatts Folgendes aufweist:
- einen ersten Abschnitt (21), der ausgehend von dem Befestigungsabschnitt des Blatts verläuft,
- einen abgewinkelten Abschnitt (22), der den ersten Abschnitt verlängert, und
- einen zweiten Abschnitt (23), der den abgewinkelten Abschnitt in Umfangsrichtung verlängert, und wobei:
- der Befestigungsabschnitt des Blatts des ersten Dämpfungsmittels dem Befestigungsabschnitt des Blatts des zweiten Dämpfungsmittels diametral gegenüberliegt,
- wenigstens ein Teilbereich des ersten Abschnitts des Blatts des zweiten Dämpfungsmittels radial zwischen dem zweiten Abschnitt des Blatts des ersten Dämpfungsmittels und der Drehachse X angeordnet ist, und
- wenigstens ein Teilbereich des Befestigungsabschnitts des Blatts des zweiten Dämpfungsmittels radial zwischen dem abgewinkelten Abschnitt des Blatts des ersten Dämpfungsmittels und der Drehachse X angeordnet ist.

7. Torsionsdämpfer nach Anspruch 6, wobei für jedes Blatt der abgewinkelte Abschnitt einen kleineren Krümmungsradius als der Krümmungsradius des ersten Abschnitts und als der Krümmungsradius des zweiten Abschnitts aufweist.

8. Torsionsdämpfer nach einem der Ansprüche 6 bis 7, wobei für jedes Blatt der zweite Abschnitt einen kleineren Krümmungsradius als der Krümmungsradius des ersten Abschnitts aufweist.

9. Torsionsdämpfer nach einem der Ansprüche 6 bis 8, wobei der erste Abschnitt eine kleinere Dicke als die Breite des zweiten Abschnitts aufweist.

10. Torsionsdämpfer nach einem der Ansprüche 1 bis 9, wobei das erste Dämpfungsmittel zum zweiten Dämpfungsmittel bezogen auf die Drehachse X symmetrisch ist.

11. Torsionsdämpfer nach einem der Ansprüche 1 bis 10, wobei die Stützelemente Rollen sind, die mittels eines Wälzlagers auf dem ersten oder zweiten jeweiligen Element drehbeweglich gelagert sind.

12. Torsionsdämpfer nach einem der Ansprüche 1 bis 11, wobei sich jedes Blatt in Umfangsrichtung über mindestens 180° erstreckt.

13. Drehmomentübertragungselement, insbesondere für ein Kraftfahrzeug, aufweisend einen Torsionsdämpfer nach einem der Ansprüche 1 bis 12.

## Claims

1. Torsion damper for a torque transmission device comprising:
- a first element (1) and a second element (2) which are rotatable with respect to one another about an axis of rotation X; and
- a first damping means and a second damping means for transmitting a torque and damping the rotation irregularities between the first element and the second element, each damping means comprising:
o an elastically deformable blade (9) secured to one of said first and second elements and comprising a fastening portion (12) for fastening the blade to said first or second element, and an elastic portion (13), the elastic portion extending circumferentially from the fastening portion to a free distal end (29), the elastic portion of the blade comprising a cam surface (11),
o a bearing element (10) borne by the other said first and second elements and arranged to cooperate with the elastic portion of the blade of said damping means, the elastic portion of the blade being arranged such that, for an angular displacement between the first and second elements with respect to an angular rest position, the bearing element exerts a bending force on the blade conjointly producing a reaction force able to return the first and second elements to said angular rest position, the bearing element comprising a cam follower arranged to cooperate with the cam surface, the cam surface being arranged such that, for an angular displacement between the first and second elements with respect to an angular rest position, the cam follower exerts a bending force on the blade conjointly producing a reaction force able to return the elements to said angular rest position,
said damper being **characterized in that** the blades of the first and of the second damping means are fastened independently to the first or second element, and the elastic portion of the blade of the first damper means extends circumferentially beyond the fastening portion of the blade of the second damping means such that at least one part of the elastic portion of the blade of the second damping means is radially arranged between the free distal end of the blade of the first damping means and the access of rotation X.

2. Torsion damper according to Claim 1, in which, in the angular rest position, the elastic portion of the blade of the first damping means and the elastic portion of the blade of the second damping means are both radially arranged between the bearing element of the first damping means and the axis of rotation X.

3. Torsion damper according to either of Claims 1 and 2, in which the elastic blade of the second damping means extends circumferentially beyond the fastening portion of the blade of the first damping means such that the elastic portion of the blade of the first damping means is radially arranged between the free distal end of the blade of the second damping means and the axis of rotation X.

4. Torsion damper according to Claim 3, in which, in the angular rest position, the elastic portion of the blade of the first damping means and the elastic portion of the blade of the second damping means are both radially arranged between the bearing element of the second damping means and the axis of rotation X.

5. Torsion damper according to one of Claims 1 to 4, in which the bearing elements of the first and of the second damping means are respectively arranged radially outside the blades of the first and of the second damping means.

6. Torsion damper according to one of Claims 1 to 5, in which the elastic portion of each blade comprises:
- a first portion (21) extending from the fastening portion of the blade,
- an elbowed portion (22) extending the first portion, and
- a second portion (23) circumferentially extending the elbowed portion, and in which:
- the fastening portion of the blade of the first damping means is diametrically opposed to the fastening portion of the blade of the second damping means,
- at least part of the first portion of the blade of the second damping means is radially arranged between the second portion of the blade of the first damping means and the axis of rotation X, and
- at least part of the fastening portion of the blade of the second damping means is radially arranged between the elbowed portion of the blade of the first damping means and the axis of rotation X.

7. Torsion damper according to Claim 6, in which, for each blade, the elbowed portion has a radius of curvature which is less than the radius of curvature of the first portion and the radius of curvature of the second portion.

8. Torsion number according to either of Claims 6 and 7, in which for each blade, the second portion has a radius of curvature which is less than the radius of curvature of the first portions.

9. Torsion damper according to one of Claims 6 to 8, in which the first portion has a thickness which is less than the thickness of the second portion.

10. Torsion damper according to one of Claims 1 to 9, in which the first damping means is symmetrical to the second damping means with respect to the axis of rotation X.

11. Torsion damper according to any one of Claims 1 to 10, in which the bearing elements are rollers mounted rotatably on the respective first or second element by way of a rolling bearing.

12. Torsion damper according to any one of Claims 1 to 11, in which each blade extends circumferentially over at least 180°.

13. Torque transmission element, in particular for a motor vehicle, comprising a torsion damper according to one of Claims 1 to 12.
